# EUROPEAN PATENT SPECIFICATION

(11) **EP 0 310 356 B1**
(45) Date of publication and mention of the grant of the patent: **24.02.1993**
(21) Application number: 88308995.5
(22) Date of filing: 28.09.1988
(51) Int. Cl.: G11B 20/10, G11B 5/035, G11B 5/008

(54) **Data reproducing apparatus**
Datenwiedergabegerät
Appareil de reproduction de données

(30) Priority: 28.09.1987 JP 244835/87
(43) Date of publication of application: 05.04.1989
(73) Proprietor: SONY CORPORATION, Tokyo 141 (JP)
(72) Inventor: Kanota, Keiji c/o Patents Division, Shinagawa-ku Tokyo 141 (JP); Murabayashi, Noboru c/o Patents Division, Shinagawa-ku Tokyo 141 (JP)
(74) Representative: Thomas, Christopher Hugo

(56) References cited:
- EP-A- 0 129 224
- EP-A- 0 143 005
- GB-A- 2 092 813
- GB-A- 2 100 495
- US-A- 4 551 771
- US-A- 4 644 419
- SMPTE JOURNAL. vol. 95, no. 3, March 86, White Plains, New York, USA page 301 - 309; Hiroshi Sugaya: "The Videotape Recorder: Its Evolution and the Present State of the Art of VTR Technology"

## Description

This invention relates to data reproducing apparatus.

An 8-mm format video tape recorder (VTR) is known as a data playback apparatus for pulse code modulated (PCM) audio data.

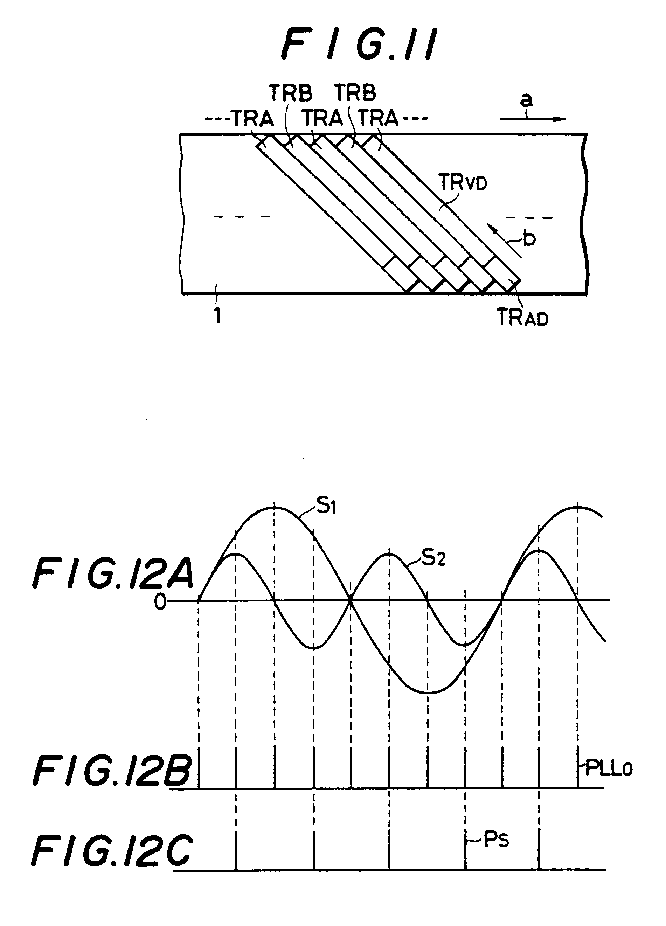

In an 8-mm VTR, as shown in Figure 11, an audio track TR_{AD} is formed contiguous to each video track TR_{VD}. These tracks constitute 2-channel recording tracks TRA and TRB. An audio signal is PCM-encoded, time-base compressed, biphase-mark modulated, and recorded in the audio track TR_{AD} on a magnetic tape 1. (See US patent specification US-A-4 551 771.)

In biphase-mark modulation, as shown in figure 12A, frequency signals S1 and S2 having frequencies f1 (2.9 MHz) and f2 (5.8 MHz) are recorded as digital data on the tape 1, while keeping a phase relationship such that their zero-crossing points coincide with each other. For example, when a PCM audio signal is at logic "L", the signal S1 having the low frequency f1 is recorded, while when the PCM audio signal is at logic "H", the signal S2 having the high frequency f2 is recorded.

When an audio signal recorded on the audio track TR_{AD} is played back, the zero-crossing point of the picked-up signal S1 or S2 is detected, as shown in Figure 12B. Upon this detection, a sampling pulse oscillator, for example with a phase locked loop (PLL) arrangement, is caused to supply pulse outputs PLL₀ having a phase shift of 45° from the signal S1 of low frequency f1, or a phase shift of 90° from the signal S2 of high frequency f2.

Of the pulse outputs PLL₀, pulses generated at the phase angles 45°, 135°, 225° and 315° of the signal S1 are used as sampling pulses PS (Figure 12C) to sample playback data. When every other two sampled values have positive values, it is determined that the data are playback data at logic "L" level.

Of the pulse outputs PLL₀, pulses generated at the phase angles 90° and 270° of the signal S2 are used as sampling pulses PS (Figure 12C) to sample playback data. When every other sampled value has a positive value, it is determined that the data are playback data at logic 'H" level.

A playback process for biphase-mark recorded data is described in our European patent specification EP-A-0 264 228.

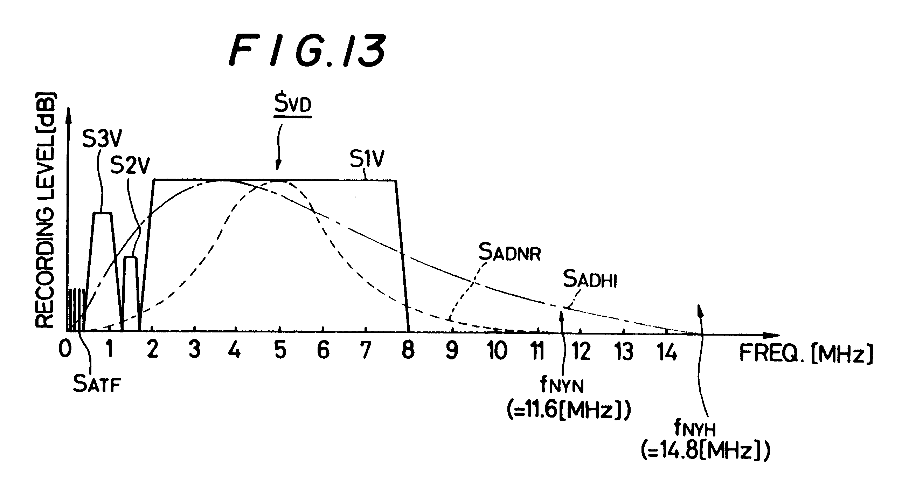

As shown in Figure 13, a video signal S_{VD} consisting of a frequency modulated (FM) luminance signal S1V, an FM audio signal S2V of lower frequency than the signal S1V, and a low-frequency chromatic signal S3V, and an automatic track follower (ATF) signal S_{ATF} are superimposed and recorded on the video track TR_{VD}. The same magnetic head as that used for recording these signals is used to record a PCM audio signal S_{ADNR}. The frequency spectrum of the PCM audio signal S_{ADNR} has a peak value at a frequency which substantially coincides with the centre frequency of the FM luminance signal S1V. The PCM audio signal has frequency characteristics wherein the signal level comes closer to zero in high and low frequency spectral ranges of the video signal S_{VD}. For this reason, the same degree of azimuth loss as that obtained when the video signal S_{VD} is played back occurs when the PCM audio signal S_{ADNR} is played back. Therefore, the PCM audio signal S_{ADNR} can be recorded and played back with no guard band between adjacent tracks.

Digital data recorded on a magnetic recording medium may have different sampling frequencies depending on the application. Therefore, a plurality of types of recording media which record digital data with different recording densities must be played back while maintaining compatibility. Thus, the functions of the data playback apparatus are increased, and applicability can be further widened.

Suppose then that in an 8-mm VTR, the recording medium which records PCM audio data having a standard digital information content sampled at a standard sampling frequency is provided, and in addition, an optional recording medium which records PCM audio data having a larger content of high-quality digital data sampled at a sampling frequency corresponding to a predetermined multiple of the standard sampling frequency is provided. It is required to play back these recording media using a common 8-mm VTR, so that a standard-quality audio signal can be played back from a standard quality recording medium, and a high-quality audio signal can be played back from the optional high-quality recording medium. Therefore, the 8-mm VTR is multifunction.

If the digital data volume of the PCM audio signal can be increased as compared with standard-quality data, a high-quality audio signal can be recorded and played back with high fidelity.

According to the present invention there is provided a data reproducing apparatus for picking up digital data, which has been recorded at a first or second recording density by at least two rotary magnetic heads so that adjacent oblique tracks are formed on a magnetic recording medium, by said magnetic heads so as to obtain first or second playback data;
characterized by:
said magnetic heads having respective first and second equalizer means having equalizing characteristics adjusted to frequency characteristics of the first and second playback data;
and
switching means for switching, in a playback mode of the first or second playback data, equalization for the first or second playback data using a corresponding one of said first and second equalizer means, wherein a playback bit error rate of an equalizer output from said first or second equalizer means is reduced.

According to the present invention there is also provided an apparatus for playing back audio digital data from a magnetic recording medium on which adjacent parallel tracks are formed so that one of audio digital data of two recording densities is selectively recorded together with a frequency modulated video information signal, in which the two audio digital data are selected to have different peak levels within the frequency spectrum of said frequency modulated video information signal;
characterized by:
equalizing means having two types of characteristics adjusted to playback frequency characteristics of the audio digital data of the two recording densities associated with said respective tracks; and
means for switching the characteristics of said equalizing means in accordance with the two audio data recorded on said recording medium.

Thus embodiments of the present invention provide a data playback apparatus which can play back recording data of a low recording density having a standard digital information content and recording data of a special high recording density having a larger digital information content, by switching equalizing characteristics in dependence on the playback data.

Digital recording data recorded on a first or second magnetic recording medium at a first or second recording density is picked up by a magnetic head to obtain first or second playback data. A first or second equalizer circuit having equalizing characteristics matching frequency characteristics of the first or second playback data is provided. In a playback mode of the first or second playback data, the first or second playback data are equalized by the first or second equalizer circuit, thereby reducing a bit error rate of the equalizer output from the first or second equalizer circuit.

When the digital recording data recorded at the first or second recording density are played back by the magnetic head, a corresponding one of the first and second playback data which have different frequency characteristics are picked up based on a difference in recording density.

The first or second playback data are equalized by the first or second equalizer circuit having equalizing characteristics matching frequency characteristics of the playback data, so that the output data with a lower bit error rate can be obtained as the equalizer output.

The invention will now be described by way of example with reference to the accompanying drawings, throughout which like parts are referred to by like references, and in which:
Figure 1 is a block diagram showing an embodiment of data playback apparatus according to the present invention;
Figures 2 and 3 are block diagrams showing an audio data processing unit and a recording/playback circuit of Figure 1;
Figure 4 is a block diagram showing a detailed arrangement of equalizer circuits of Figure 3;
Figure 5 is a table showing equalizing conditions of an equalizer;
Figure 6 is a block diagram showing a detailed arrangement of data detectors of Figure 3;
Figures 7 and 8 are sectional views showing an arrangement of a magnetic tape;
Figure 9 is a graph showing amplitude characteristics of the tape;
Figure 10 is a diagram showing a tape pattern according to a tape speed;
Figure 11 is a diagram showing a recording pattern on a magnetic tape;
Figure 12 is a signal waveform chart showing the playback principle of biphase-mark modulation; and
Figure 13 is a graph showing a spectrum of a signal to be recorded/played back.

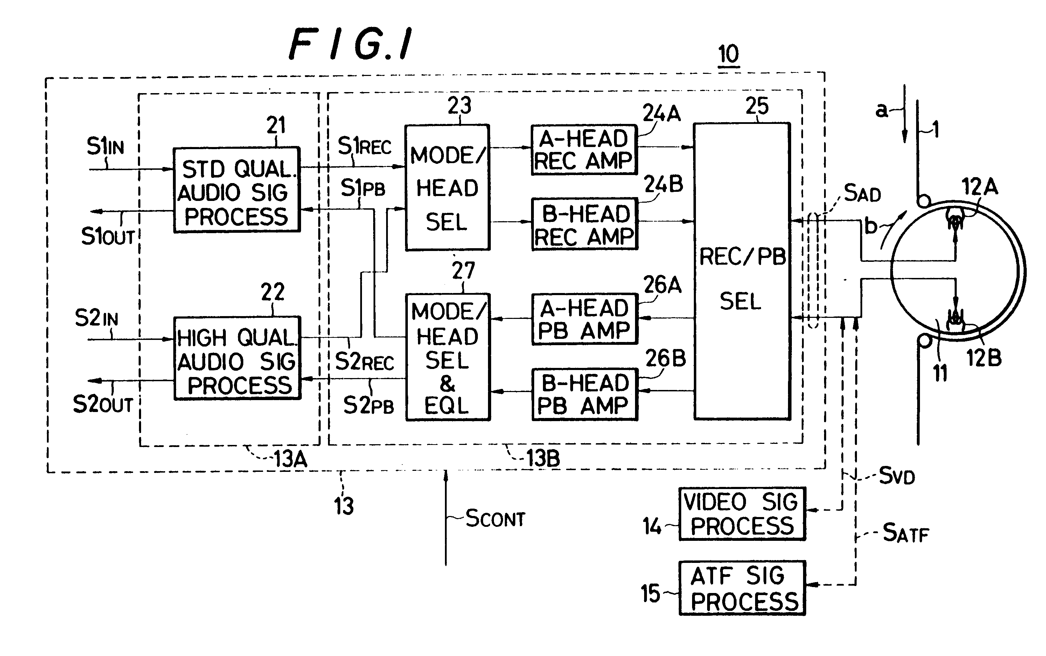

Figure 1 shows an embodiment wherein the present invention is applied to an 8-mm VTR. A data recording/playback apparatus 10 comprises a pair of magnetic heads (to be referred to as A and B heads) 12A and 12B mounted on a rotary drum 11 so as to scan a magnetic tape 1 helically. As has been described above with reference to Figure 11, the A and B heads 12A and 12B sequentially and alternately scan recording tracks TRA and TRB consisting of video tracks TR_{VD} and audio tracks TR_{AD}.

The A and B heads 12A and 12B are connected to a PCM audio signal processing section 13, a video signal processing section 14, and an automatic track following (ATF) signal processing section 15 for automatic head tracking. In a recording mode, a video signal S_{VD} and an ATF signal S_{ATF} from the video and ATF signal processing sections 14 and 15 are superimposed and recorded on the video track TR_{VD}. A PCM audio signal S_{AD} from the PCM audio signal processing section 13 is recorded on the audio track TR_{AD}.

The PCM audio signal processing section 13 comprises an audio data processing unit 13A and a recording/playback circuit 13B respectively controlled by a control signal S_{CONT} supplied from a system controller.

The audio data processing unit 13A has a standard-quality audio signal procesing circuit 21 and a high-quality audio signal processing circuit 22. In the recording mode, recording audio data S1_{REC} and S2_{REC} formed by first and second audio input signals S1_{IN} and S2_{IN} as analogue signals are supplied to a mode/head selector circuit 23 in a part of the recording/playback circuit 13B.

The mode/head selector circuit 23 selects one of the recording audio data S1_{REC} and S2_{REC} in accordance with a designated one of standard and high-quality recording modes. The selected data are sequentially supplied to an REC/PB selector circuit 25 through an A or B-head REC amplifier 24A or 24B.

The selector circuit 25 sequentially supplies the audio data supplied from the A or B-head REC amplifier 24A or 24B to the A or B head 12A as audio data S_{AD} at predetermined timings, thereby recording the data on the audio track TR_{AD} (Figure 11).

In the playback mode, the REC/PB selector circuit 25 supplies the audio signal S_{AD} picked up by the A and B heads 12A and 12B to a mode/head selector and equalizer circuit 27 through an A or B-head PB amplifier 26A or 26B.

The mode/head selector and equalizer circuit 27 selectively derives the playback audio signal input from the A or B-head PB amplifier 26A or 26B, and executes a predetermined equalizing procesing in accordance with the present mode (that is, the standard or high-quality playback mode). Thereafter, playback audio data S1_{PB} or S2_{PB} are selectively supplied to a standard or high-quality audio signal processing circuit 21 or 22.

The audio signal processing circuits 21 and 22 convert the input playback audio data S1_{PB} and S2_{PB} into analogue signals, and supply them as first and second audio output signal S1_{OUT} and S2_{OUT}.

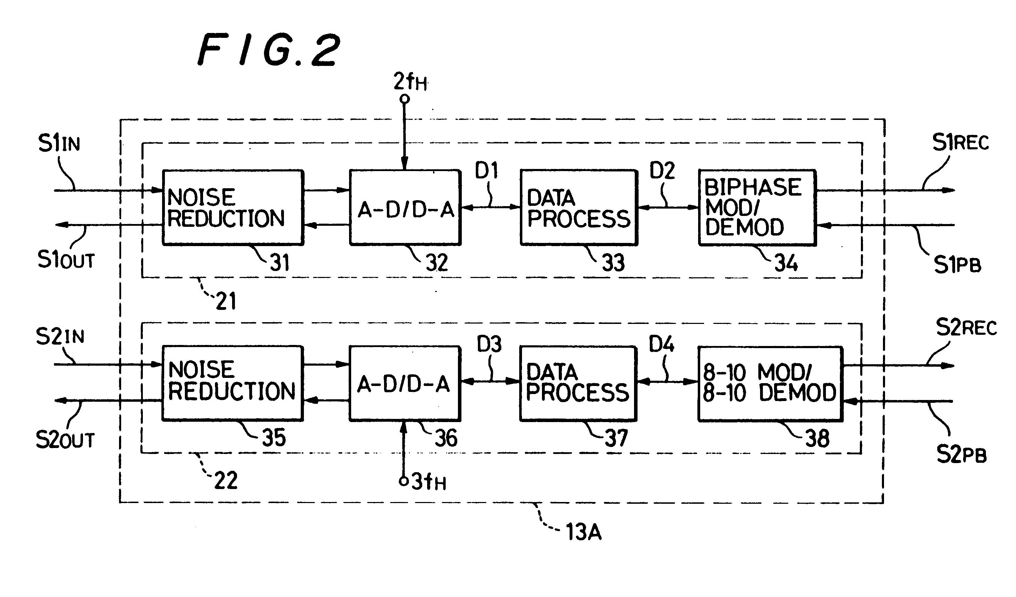

The standard-quality audio signal processing circuit 21 of the audio data processing unit 13A supplies the first audio input signal S1_{IN} to an analogue-digital/digital-analogue (A/D-D/A) converter 32 through an analogue noise reduction circuit 31, as shown in Figure 2.

The (A/D-D/A) converter 32 samples the input first audio signal S1_{IN} at a standard sampling frequency (for example, 2f_{H} = 31.5 MHz) to convert it into 10-bit PCM digital data D1. The data D1 are supplied to a data processing circuit 33, which stores the PCM data D1 in a frame memory. A cyclic redundancy check (CRC) error code is added to the stored digital data. The number of bits of the digital data is compressed by 10 to 8 bit conversion. The compressed 8-bit data D2 are fed from the processing circuit 33 to a modulation/demodulation circuit 34.

The 10 to 8 bit conversion is effected in a non-linear encoder or a non-linear compressor which performs non-linear quantization for reducing quantizing noise.

The modulation/demodulation circuit 34 biphase-mark modulates the data D2 with first and second frequencies f1 and f2 (for example, f1 = 2.9 MHz and f2 = 5.8 MHz) and supplies the modulated data as recording audio data S1_{REC}, as already described with reference to Figure 12.

The audio signal processing circuit 21 samples the input first audio signal S1_{IN} at a standard sampling frequency and biphase-mark modulates the sampled signal, thus forming recording audio data S1_{REC} consisting of two frequency signals S1 and S2, forming the recording audio data S1_{REC}.

In the standard-quality playback mode, the standard-quality audio signal processing circuit 21 receives the first playback audio data S1_{PB} at the modulation/demodulation circuit 34, demodulates the biphase-mark modulated playback audio data S1_{PB}, and supplies the demodulated data as the digital data D2 to the data processing circuit 33.

In this case, the data processing circuit 33 10 to 8 bit demodulates the digital data D2 using an internal frame memory, and corrects errors using the CRC error code. In addition, the circuit 33 effects interpolation for lost data, and supplies the interpolated data as PCM digital data D1 to the A/D-D/A converter 32.

The A/D-D/A converter 32 converts the PCM digital data D1 into an analogue signal using a standard sampling frequency, and supplies the analogue signal as a first audio output signal S1_{OUT} through the analogue noise reduction circuit 31.

In this manner, the standard-quality audio signal processing circuit 21 converts the 8-bit biphase-mark modulated playback audio data S1_{PB} into 10-bit PCM digital data, converts the digital data into an analogue signal, and then supplies the analogue signal as the first audio output signal S1_{OUT}.

The above-mentioned standard-quality audio signal processing circuit 21 is disclosed in US patent specification US-A-4 551 771.

The high-quality audio signal processing circuit 22 derives a second audio input signal S2_{IN} in an A/D-D/A converter 36 through an analogue noise reduction circuit 35, as shown in Figure 2.

The A/D-D/A converter 36 samples the second audio input signal S2_{IN} at a specific sampling frequency (for example, 3f_{H} = 48 kHz) higher than the standard sampling frequency, and supplies 16-bit PCM digital data D3 to a data processing circuit 37.

The data processing circuit 37 adds a cross interleave Reed-Solomon code (CIRC) to the PCM digital data D3 using an internal frame memory, and supplies it as digital data D4 to a modulation/demodulation circuit 38.

The modulation/demodulation circuit 38 performs 8 to 10 bit modulation and non return to zero inverted (NRZI) conversion, so that the digital data D4 are converted into a data shift, and supplies it as second recording audio data S2_{REC}.

To obtain an NRZI output through 8 to 10 bit modulation, signal processing as disclosed in US patent specifications US-A-4 577 180 and US-A-4 617 552 and used in a digital audio tape recorder known as an R-DAT is applicable.

The 8 to 10 bit modulation is a so-called group coded modulation wherein data bits are segmented into N-bit blocks, each N-bit block is converted to an M-bit data string, and S^{N} patterns are selected from the converted 2^{M} patterns, where N = 8 and M = 10.

In this manner, the high-quality audio signal processing circuit 22 converts the second audio input signal S2_{IN} into PCM digital data at a higher sampling frequency, so that PCM digital data having a much larger information content than that from the standard-quality audio signal processing circuit 21 can be obtained. Thus, high-quality recording audio data S2_{REC} can be derived accordingly.

In the high-quality playback mode, the high-quality audio signal processing circuit 22 causes the modulation/demodulation circuit 38 to NRZI inverse-convert and 8 to 10 bit demodulate the second playback audio data S2_{PB}, and to supply the demodulated digital data D4 to the data processing circuit 37.

The data processing circuit 37 performs error correction using the internal frame memory and the CIRC error code of the digital data D4, and also performs interpolation of the data. The data processing circuit 37 supplies the obtained data as PCM digital data D13 to the A/D-D/A converter 36.

The A/D-D/A converter 36 converts the PCM digital data D3 into an analogue signal at a specific sampling frequency, and supplies the analogue signal as a second audio output signal S2_{OUT} through the analogue noise reduction circuit 35.

In this manner, the high-quality audio signal processing circuit 22 can convert the high-quality playback audio data S2_{PB} played back in the high-quality playback mode at a higher sampling frequency than the standard one, thus obtaining the high-quality second audio output signal S2_{OUT}.

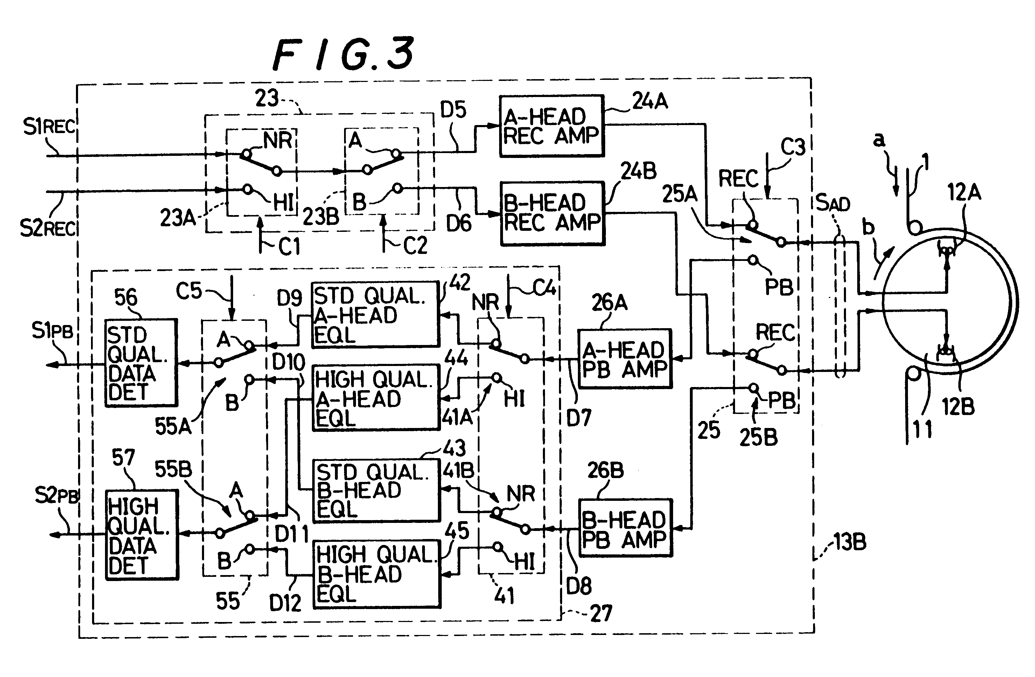

The respective circuit sections of the recording/playback circuit 13B are arranged as shown in Figure 3.

More specifically, the mode/head selector circuit 23 has a mode switch circuit 23A and a head switch circuit 23B. The selector circuit 23 receives the first recording audio data S1_{REC} supplied from the standard-quality audio signal processing circuit 21 (Figure 2) at a standard-quality mode input terminal NR, and receives the second recording audio data S2_{REC} supplied from the high-quality mode input terminal HI. The mode switch circuit 23A supplies the data S1_{REC} or S2_{REC} to the head switch circuit 23B in accordance with a mode designation signal C1 supplied from the system controller as a control signal S_{CONT}.

The head switch circuit 23B supplied the data S1_{REC} or S2_{REC} from the A or B-head output terminal A or B to the REC/PB selector circuit 25 through the A or B-head amplifier 24A or 24B in accordance with a head switching signal C2 supplied from the system controller as the control signal S_{CONT}.

The REC/PB selector circuit 25 has REC/PB switch circuits 25A and 25B each having a recording input terminal REC and a playback input terminal PB. In the recording mode, the REC/PB selector circuit 25 supplies recording data D5 and D6 to the A and B heads 12A and 12B as the PCM audio signal S_{AD} through the recording input terminals REC of the REC/PB switch circuits 25A and 25B in accordance with an REC/PB switching signal C3 supplied from the system controller as the control signal S_{CONT}. In this manner, the PCM audio signal S_{AD} is recorded on the audio tracks TR_{AD} of the recording tracks TRA and TRB on the tape 1 (Figure 11).

In this manner, in the standard-quality recording mode, the standard-quality PCM audio signal S_{ADNR} which is sampled at the standard sampling frequency is recorded on the audio track TR_{AD} at a standard recording density. In the high-quality PCM recording mode, the high-quality PCM audio signal S_{ADHI} which is sampled at a high-quality sampling frequency is recorded at a higher recording density than the standard recording density.

In the playback mode, the A and B heads 12A and 12B pick up the PCM audio signal S_{AD} from the audio track TR_{AD}. The signal S_{AD} is supplied to the A and B-head PB amplifiers 26A and 26B through the playback output terminals PB of the REC/PB switch circuits 25A and 25B. Playback data D7 and D8 from the amplifiers 26A and 26B are supplied to mode switch circuits 41A and 41B of a mode selector circuit 41 of the mode/head selector and equalizer circuit 27.

The mode switch circuits 41A and 41B are switched in response to a mode selection signal C4 supplied as the selection signal S_{SEL} from the system controller. In the standard-quality mode, the playback data D7 and D8 are respectively supplied to standard-quality A and B-head equalizer circuits 42 and 43 through standard-quality mode output terminals NR. In the high-quality mode, the data D7 and D8 are respectively supplied to high-quality A and B-head equalizer circuits 44 and 45 through high-quality mode output terminals HI.

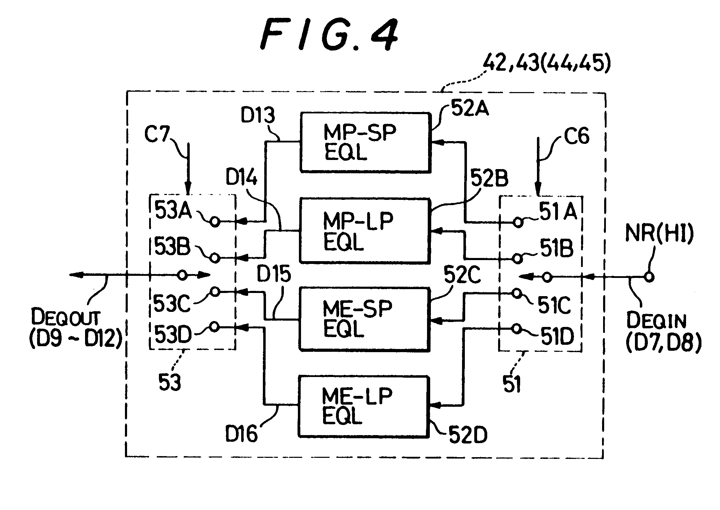

The equalizer circuits 42, 43, 44 and 45 supply input data D_{EQIN} consisting of playback data D7 or D8 to an MP-SP equalizer 52A, an MP-LP equalizer 52B, an ME-SP equalizer 52C and an ME-LP equalizer 52D through switching output terminals 51A, 51B, 51C and 51D of an equalizer switch circuit 51, in dependence on an equalizer switching signal C6 supplied from the system controller as the control signal S_{CONT}, as shown in Figure 4. At the same time, the outputs from the equalizers 52A to 52D are supplied as output data D_{EQOUT} through switching input terminals 53A, 53B, 53C and 53D interlocked with the equalizer switch current 51 in accordance with an equalizer switching signal C7 supplied from the system controller as the control signal S_{CONT}.

The equalizers 52A to 52D have equalizing characteristics respectively corresponding to the type of the tape 1 used as the magnetic recording medium, the playback speed of the tape 1, the difference in sound-quality mode assigned to the equalizer circuits 42 to 45, and the type of head.

In this embodiment, the tape 1 can be a metal powder coating type magnetic tape (MP magnetic tape), or an evaporated metal type magnetic tape (ME magnetic tape). A system for switching the equalizer circuits in accordance with the MP or ME magnetic tape is disclosed in European patent specification EP-A-0 264 228.

The playback speed of the tape 1 in the playback mode can be switched between a standard playback speed (SP speed) and a long-playback speed (LP speed).

In addition, in this embodiment, first digital data (standard-quality data) and a second digital data (high-quality data) can be recorded as audio data on the audio track TR_{AD}, and a pair of heads, that is, the A and B heads 12A and 12B are used for recording/playing back data.

When these recording/playback conditions, that is, the standard or high-quality mode, the A or B heads 12A or 12B, the MP or ME magnetic tape, and the SP or LP speed are changed, the audio data S_{AD} recorded/played back on/from the audio track TR_{AD} have different response characteristics with respect to a change in frequency. The equalizer circuits 52A to 52D equalize the frequency characteristics of the playback data D7 and D8 picked up from the audio track TR_{AD} so that the eye pattern openings of two frequency signals S1 and S2 constituting a biphase mark are maximized, while minimizing the bit error rate to an acceptable level under various selection conditions.

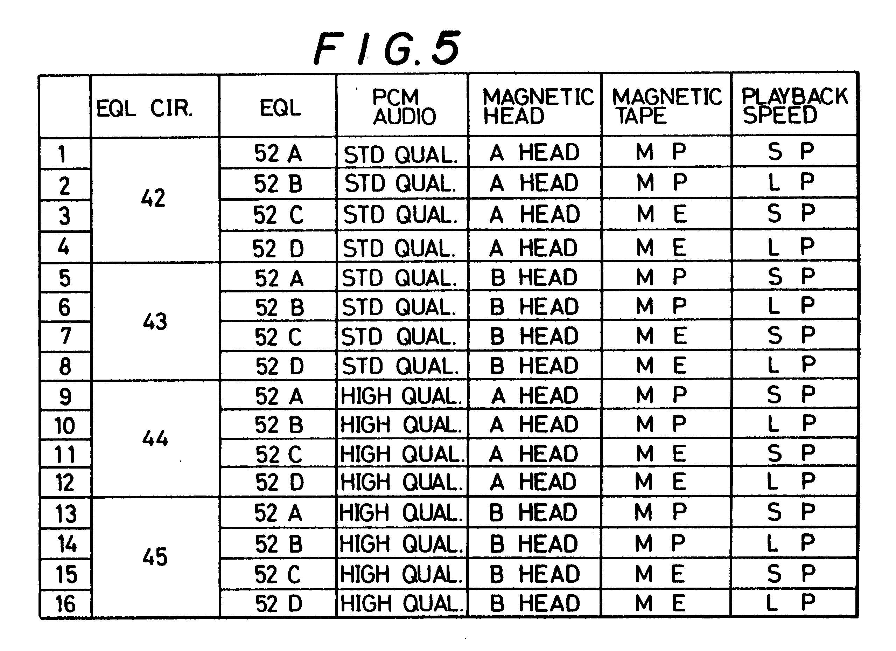

For example, when the standard-quality PCM audio signal S_{AD} is to be recorded, the A head is to be used, the MP magnetic tape is to be used as the tape 1, and the playback speed is the SP speed, the MP-SP equalizer 52A of the standard-quality A-head equalizer circuit 42 equalizes the frequency characteristics of the playback data D7 played back from the A head 12A in accordance with these selection conditions, so that the bit error rate can be minimized to an acceptable level, as shown in the first column of Figure 5. Then, the equalizer 52A supplies the equalized data as output data D9.

Alternatively, when the high-quality PCM audio signal S_{AD} is to be recorded, the A head is to be used, the ME magnetic tape is to be used as the tape 1, and the playback speed is the SP speed, the ME-SP equalizer 52C of the standard-quality A-head equalizer circuit 44 equalizes the frequency characteristics of the playback data D7 played back from the A head 12A in accordance with these selection conditions, so that the bit error rate can be minimized to an acceptable level, as shown in the first column of Figure 5. Then, the equalizer 52C supplies the equalized data as output data D11.

For other selection conditions, the equalizers 52A to 52D of the corresponding equalizer circuits 42 to 45 equalize the frequency characteristics of the playback data D7 or D8 and supply them as output data D9 to D12.

The equalizer switch circuits 51 and 53 of the equalizer circuits 42 and 45 receive the switching signals C6 and C7 and are simultaneously switched in cooperation with the switching input and output terminals 51A, 53A, 51B, 53B, 51C, 53C, 51D and 53D in accordance with combined selection conditions of the type of tape 1, that is MP or ME tape, and the playback speed, that is, SP or LP speed, that is, MP-SP, MP-LP, ME-SP and ME-LP. In this manner, the output data D13, D14, D15 and D16 from the equalizers 52A to 52D are supplied to a head selector circuit 55 (Figure 3) as output data D9 to D12 of the equalizer circuits 42 to 45.

The head selector circuit 55 has head switch circuits 55A and 55B which are switched to cooperate with each other in response to a head selection signal C5 supplied as the control signal S_{CONT} from the system controller. Output data D9 or D10 from the equalizer 42 or 43 is supplied to a standard data detect circuit 56 through an A or B-head input terminal A or B of the head switch circuit 55A.

The head switch circuit 55B supplies output data D11 or D12 from the equalizer circuit 44 or 45 to a high-quality data detect circuit 57 through its A or B-head input terminal A or B.

In each of the standard and high-quality data detect circuits 56 and 57, input data D_{PBIN} (the data D9 or D10 and D11 or D12) is compared with a zero cross reference voltage V_{R} generated by a reference voltage source 59 by a comparator 58. A data detection signal D21 which goes to logic 'H' level when the input data D_{PBIN} is raised to a positive value exceeding zero level, and goes to logic 'L' level when the input data falls to a negative value is supplied from the output terminal of the comparator 58.

The data detection signal D21 is supplied to a clock signal regenerator circuit 60 having the PLL arrangement. A detect clock signal CK_{PB} phase-locked with the data detection signal D21 appearing at the output terminal of the regenerator circuit 60 is supplied to a clock input terminal of a synchronization circuit 61 as a signal having the same function as the sampling pulse which has already been described with reference to Figure 12C. The clock signal is supplied to the system controller as a system clock.

The synchronization circuit 61 comprises a D flip-flop circuit. When the detection clock signal CK_{PB} is supplied to the clock input terminal C of the synchronization circuit 61, it is set or reset when the data detection signal D21 is at logic 'H' or 'L' level. The Q output from the flip-flop circuit is supplied as detection output data D_{PBOUT}, and is used as the first or second playback audio data S1_{PB} or S2_{PB} of Figure 3.

With the above arrangement, when the first audio input signal S1_{IN} (or second audio input signal S2_{IN}) is recorded on the tape 1 in the standard-quality (or high-quality) recording mode, the mode switch circuit 23A of the mode head selector circuit 23 of the recording/playback circuit 13B is switched to the standard-quality mode input terminal NR (or high-quality mode input terminal HI). In this state, the A and B heads 12A and 12B alternately scan the tape 1, so that the recording data D5 or D6 are alternately recorded on the video track TR_{VD} of the recording track TRA or TRB (Figure 1).

In this manner, in the standard-quality mode, the PCM audio signal S_{ADNR} which is sampled at a standard sampling frequency for the 8-mm format VTR is recorded on the audio track TR_{AD} in the standard quality mode, as has been described with reference to Figure 13.

In contrast to this, in the high-quality mode, the high-quality PCM audio signal S_{ADHI} sampled at a specially high sampling frequency (Figure 13) is recorded.

The standard-quality PCM audio signal S_{ADNR} is biphase-mark modulated at frequencies f1 (2.9 MHz) and f2 (5.8 MHz), as has been described with reference to Figure 13. Thus, the signal S_{ADNR} has a frequency spectrum having a peak level at a frequency substantially coinciding with the centre frequency of the luminance signal S1 of the video signal S_{VD} within the range of f_{NYN} = 2f2 (= 11.6 MHz), and is recorded on the tape 1 as a digital signal of a standard recording density.

In contrast to this, the high-quality PCM audio signal S_{ADHI} is 8 to 10 bit modulated and NRZI modulated, as indicated by an alternate long and short dashed line in Figure 13. Thus, the signal S_{ADHI} has a frequency spectrum having a peak frequency near the peak frequency of the standard-quality PCM audio signal S_{ADNR} within the range of f_{NYH} = 2f3 (= 14.8 MHz), and is recorded on the tape 1 as a digital signal having a recording density higher than the standard recording density.

Therefore, the high-quality PCM audio signal S_{ADHI} can be recorded on the tape 1 by the guard-bandless method by effectively utilizing the azimuth angles of the A and B heads 12A and 12B without causing cross-talk, as well as the standard-quality PCM audio signal S_{ADNR}.

In the playback mode, the mode/head selector and the equalizer circuit 27 select one of the equalizers 52A to 52D (Figure 4) having corresponding equalizing characteristics in accordance with the difference in sound quality of the PCM audio signal recorded on the tape 1 to be played back, the type of the tape 1 in use, the difference in playback speed of the tape 1, and the type of head used when the recorded data are picked up. Thus, the audio signal can be played back at a minimum bit error rate under the current playback condition.

Firstly, the equalizers 52A to 52D constituting the standard-quality A and B-heads equalizer circuits 42 and 43 of the equalizer circuits 42 to 45 have equalizing characteristics matching the standard-quality PCM audio signal S_{ADNR} (Figure 13). In contrast to this, the equalizers 52A to 52D constituting the high-quality A and B-head equalizer circuits 44 and 45 have equalizing characteristics matching the high-quality audio signal S_{ADHI} (Figure 13). The mode switch circuits 41A and 41b of the mode selector circuit 41 are switched to the standard-quality mode output terminals NR or high-quality mode output terminals HI, so that the equalizer matching the sound-quality mode can be selected.

Secondly, since the A and B heads 12A and 12B for picking up the audio signal from the audio track TR_{AD} have specific magnetic conversion characteristics due to their variations, a difference in characteristics influences the playback data D7 and D8. The equalizer having optimum equalizing characteristics with respect to a difference in frequency characteristics is arranged.

More specifically, the standard and high-quality A-head equalizer circuits 42 and 44 or the standard and high-quality B-head equalizer circuits 43 and 45 are arranged in correspondence with the A or B heads 12A or 12B. The equalizer circuits 52A to 52D constituting each equalizer circuit have optimum equalizing characteristics of the A or B head 12A or 12B. The head switch circuits 55A and 55B of the head selector circuit 55 select the A or B-head input terminal A or B, so that output data output from the corresponding equalizer is selected. In this manner, equalizing processing matching the frequency characteristics of the A or B head can be achieved.

Thirdly, the playback data D7 and D8 exhibit different frequency characteristics depending on the MP or ME magnetic tape used as the tape 1.

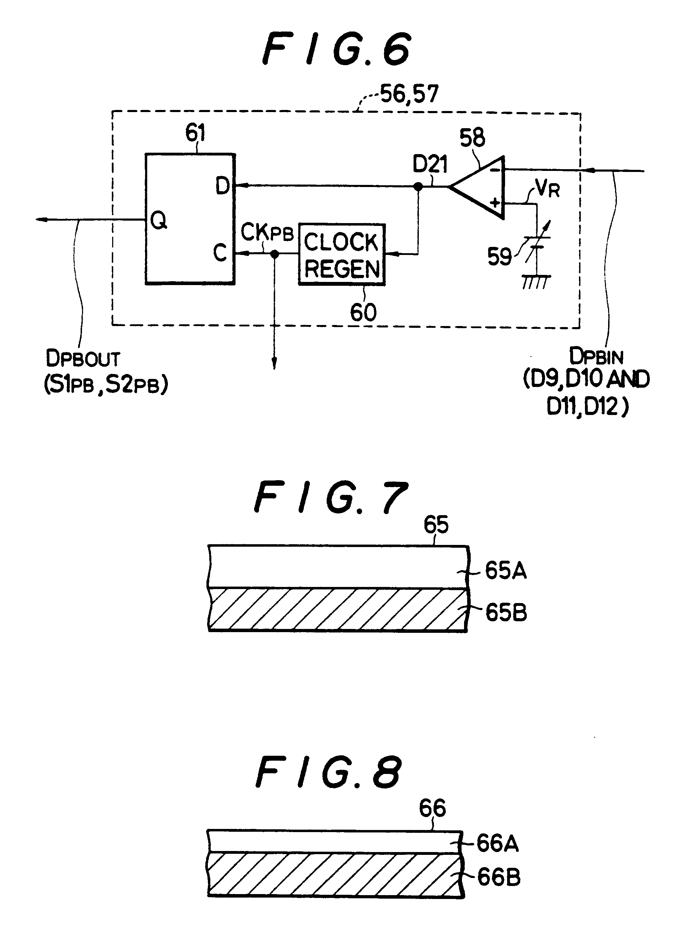

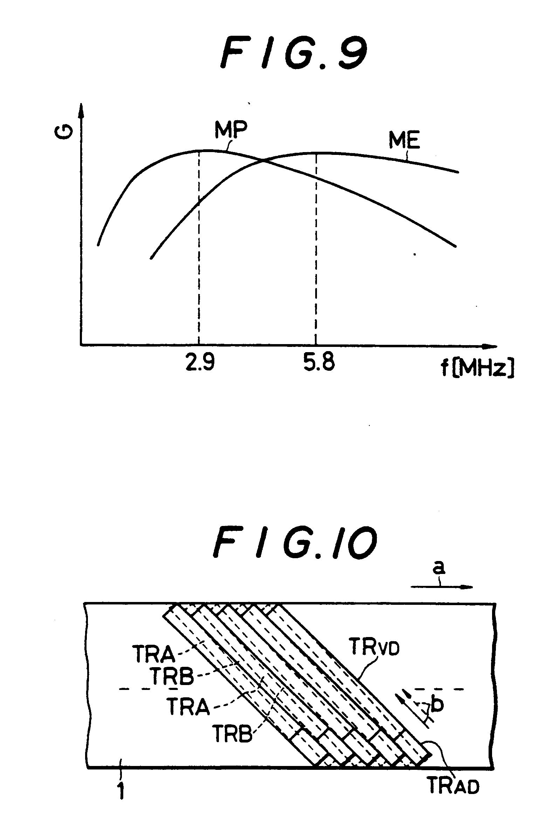

More specifically, the frequency characteristic of an MP magnetic tape 65 prepared by coating a magnetic layer 65A on a base 65B, as shown in Figure 7, has a peak level in a region near the frequency f1 (2.9 MHz),as indicated by a curve MP in Figure 9. That is, the curve MP bends downward as the frequency f is increased/decreased.

In contrast to this, in an ME magnetic tape 66 prepared by forming a magnetic layer 66A on a base 66B by sputtering as shown in Figure 8, since the magnetic layer 66A has a small thickness, a low-frequency signal component may often punch through the magnetic layer 66A during recording. For this reason, the frequency characteristic of the tape 66 has a peak level near the high frequency f2 (5.8 MHz), as indicated by a curve ME in Figure 9. Thus, the characteristic curve bends downward as the frequency f is increased/decreased.

In addition, since the magnetic layer 65A of the MP tape 65 is formed by coating, an axis of easy magnetization is not typically formed on the surface of the tape 65. In contrast to this, since the ME tape 66 is obliquely subjected to a vapour deposition treatment, the axis of easy magnetization tends to be typically formed on the surface of the tape 66.

When the MP or ME tape 65 or 66 is selectively used as the tape 1, the signal levels of the playback data D7 and D8 have different frequency characteristics depending on the type of the tape 1.

A difference in frequency characteristics based on the type of the tape 1 can be equalized by optimal equalizing characteristics by selecting the equalizers 52A to 52D of the equalizer circuits 42 to 45.

More specifically, when the MP tape 65 is used as the tape 1, the equalizer switch circuits 51 and 53 of the equalizer circuits 42 to 45 are switched to the switching terminals 51A, 51B, 53A, and 53B. Thus, input data D_{EQIN} are supplied to the MP-SP and MP-LP equalizers 52A and 52B, so that output data D_{EQOUT} equalized by the equalizing characteristics matching the MP tape 65 can be obtained.

In contrast to this, when the ME tape 66 is used as the tape 1, the equalizer switch circuits 51 and 53 of the equalizer circuits 42 to 45 are switched to the switching terminals 51C, 51D, 53C and 53D. Thus, input data D_{EQIN} are supplied to the ME-SP and ME-LP equalizers by equalizing characteristics matching the ME tape 66 can be obtained.

Fourthly, when the tape speed of the tape 1 is switched, the scanning direction of the A and B heads 12A and 12B with respect to the axis of easy magnetization formed on the tape 1 is changed. This change influences the frequency characteristics of the playback data D7 and D8.

More specifically, the recording tracks TRA and TRB formed when the tape 1 travels at the LP speed are formed, as indicated by broken lines in Figure 10, in a scanning direction different from that at the SP speed indicated by the solid lines. Therefore, if the scanning directions of the recording tracks TRA and TRB are different with respect to the axis of easy magnetization, the frequency characteristics of the playback data D7 and D8 differ accordingly.

A difference in tape speed of the tape 1 can be equalized by the equalizers 52A to 52D of the equalizer circuits 42 to 45. When the tape 1 is played back at the SP speed, the equalizer switch circuits 51 and 53 of the equalizer circuits 42 to 45 are switched to the switching signal terminals 51A, 51C, 53A and 53C. In this manner, the input data D_{EQIN} is equalized by the equalizing characteristics matching the speed of the tape 1 by the MP-SP equalizer 52A and ME-LP equalizer 52C, thus supplying the output data D_{EQOUT}.

In contrast to this, when the tape 1 travels at the LP speed, the equalizer switch circuits 51 and 53 are switched to the switching signal terminals 51B, 51D, 53B and 53D. In this manner, the input data D_{EQIN} is equalized by the equalizing characteristics matching the speed of the tape 1 by the MP-LP equalizer 52B and ME-LP equalizer 52D, thus supplying the output data D_{EQOUT}.

With the above arrangement, when the PCM audio signal is played back from the tape 1, the equalizers having equalizing characteristics adjusted to conditions causing bit error rate degradation are arranged in consideration of the playback data D7 and D8 picked up by the magnetic heads 12A and 12B so as to equalize the frequency characteristics of respective sections of the magnetic conversion means. In this manner, a data playback apparatus which can play back a tape 1 which records the standard-quality PCM audio signal at a standard recording density and a tape 1 which records the high-quality PCM audio signal at a high recording density while maintaining compatibility can be easily realized.

When a magnetic head, a magnetic tape, or a playback speed of the magnetic tape are switched, an equalizer having the corresponding equalizing characteristics is selected, so that a data playback apparatus having a minimum bit error rate can be easily realized.

In the above embodiment, the tape speed of the tape 1 is switched between two modes, that is, the SP and LP modes. Instead, if an equalizer having equalizing characteristics matching a variable speed playback mode for driving the tape 1 at a predetermined multiple speed is provided, the same effect as described above can be obtained.

In the above embodiment, the biphase-mark modulation and 8 to 10 bit modulation have been described. However, the invention is not limited to this, and can be widely applied to a case wherein a plurality of digital data having different recording densities are recorded.

In the above embodiment, a magnetic tape is used as a magnetic recording medium. However, the invention is not limited to this. For example, other magnetic recording media such as a magnetic disc may be employed.

In the above embodiment, the invention is applied to the case wherein the PCM audio signal of the 8-mm format VTR is recorded. However, the invention is not limited to this, but can be applied to recording/playback apparatuses which record/play back data from magnetic recording media for recording digital signals of different recording densities while maintaining compatibility.

## Claims

1. A data reproducing apparatus for picking up digital data, which have been recorded at a first or second recording density by at least two rotary magnetic heads (12A, 12B) so that adjacent oblique tracks (TRA, TRB) are formed on a magnetic recording medium (1), by said magnetic heads (12A, 12B) so as to obtain first or second playback data;
characterized by:
said magnetic heads having respective first and second equalizer means (42, 43; 44, 45) having equalizing characteristics adjusted to frequency characteristics of the first and second playback data;
and
switching means (41) for switching, in a playback mode of the first or second playback data, equalization for the first or second playback data using a corresponding one of said first and second equalizer means (42, 43; 44, 45), wherein a playback bit error rate of an equalizer output from said first or second equalizer means (42, 43; 44, 45) is reduced.

2. Apparatus according to claim 1 wherein the digital data recorded at the first and second recording density are data having characteristics such that a central frequency spectrum component when the first digital data are recorded on said magnetic recording medium (1) is higher than a central frequency spectrum component when the second digital data are recorded.

3. Apparatus according to claim 2 wherein the digital data having the first recording density are obtained by modulation in which different frequency components correspond respectively to binary states 1 and 0 of the digital data.

4. Apparatus according to claim 2 wherein the digital data having the second recording density is obtained by group coded modulation in which data bits are segmented into N-bit blocks, each N-bit block is converted to M-bit data, and 2^{N} patterns are selected from the converted 2^{M} patterns.

5. Apparatus according to claim 4 wherein the second digital data are subjected to modulation where N = 8 bits and M = 10 bits.

6. Apparatus according to claim 1 wherein the digital recording data to be recorded can be selectively recorded on first and second magnetic recording media (MP, ME) having different recording characteristics,
said first equalizer means (42, 43) has two equalizers (42, 43) having equalizing characteristics adjusted to frequency characteristics of the first playback data consisting of two types of playback data obtained by playing back the digital recording data recorded on said first and second magnetic recording media (MP, ME) at the first recording density, and said second equalizer means (44, 45) has two equalizers (44, 45) having equalizing characteristics adjusted to frequency characteristics of the second playback data consisting of two types of playback data obtained by playing back the digital recording data recorded on said first and second magnetic recording media (MP, ME) at the second recording density.

7. Apparatus according to claim 1 wherein said magnetic recording medium (1) travels in one of first and second playback speed modes in which travel speeds are different from each other,
said first equalizer means (42, 43) has two equalizers (42, 43) having equalizing characteristics adjusted to frequency characteristics of the first playback data consisting of two types of playback data played back from said magnetic recording medium (1) in the first and second playback speed mode, and
said second equalizer means (44, 45) has two equalizers (44, 45) having equalizing characteristics adjusted to frequency characteristics of the second playback data consisting of two types of playback data played back from said magnetic recording medium (1) in the first and second playback speed mode.

8. Apparatus according to claim 1, claim 6 or claim 7 wherein characteristics of said equalizer means (42, 43; 44, 45) are adjusted in accordance with a variation in characteristics of said two rotary magnetic heads (12A, 12B).

9. An apparatus for playing back audio digital data from a magnetic recording medium (1) on which adjacent parallel tracks (TRA, TRB) are formed so that one of audio digital data of two recording densities is selectively recorded together with a frequency modulated video information signal, in which the two audio digital data are selected to have different peak levels within the frequency spectrum of said frequency modulated video information signal;
characterized by:
equalizing means (42, 43; 44, 45) having two types of characteristics adjusted to playback frequency characteristics of the audio digital data of the two recording densities associated with said respective tracks (TRA, TRB); and
means (41) for switching the characteristics of said equalizing means (42, 43; 44, 45) in accordance with the two audio data recorded on said recording medium (1).

## Patentansprüche

1. Datenwiedergabegerät zur Aufnahme digitaler Daten, die durch wenigstens zwei Magnetdrehköpfe (12A, 12B) mit einer ersten oder zweiten Aufzeichnungsdichte derart aufgezeichnet sind, daß durch die Magnetköpfe (12A, 12B) benachbarte Schrägspuren (TRA, TRB) auf einem magnetischen Aufzeichnungsmedium (1) gebildet werden, um erste oder zweite Wiedergabedaten zu erhalten,
**dadurch gekennzeichnet,**
daß die Magnetköpfe jeweils eine erste und zweite Entzerrereinrichtung (42, 43; 44, 45) mit auf Frequenzcharakteristiken der ersten und zweiten Wiedergabedaten eingestellten Entzerrungscharakteristiken aufweist, und
daß eine Schalteinrichtung (41) zum Schalten einer Entzerrung für die ersten oder zweiten Wiedergabedaten in einem Wiedergabemodus der ersten oder zweiten Wiedergabedaten unter Verwendung der korrespondierenden ersten oder zweiten Entzerrereinrichtung (42, 43; 44, 45) vorgesehen ist, wobei eine Wiedergabebitfehlerrate eines Entzerrerausgangssignals aus der ersten oder zweiten Entzerrereinrichtung (42, 43; 44, 45) reduziert ist.

2. Gerät nach Anspruch 1, wobei die digitalen Daten, die mit der ersten und zweiten Aufzeichnungsdichte aufgezeichnet sind, Daten mit derartigen Charakteristiken sind, daß eine zentrale Frequenzspektrumskomponente bei auf dem magnetischen Aufzeichnungsmedium (1) aufgezeichneten ersten digitalen Daten höher als eine Frequenzspektrumskomponente bei den aufgezeichneten zweiten digitalen Daten ist.

3. Gerät nach Anspruch 2, wobei die digitalen Daten durch eine Modulation erhalten sind, bei welcher verschiedene Frequenzkomponenten mit den binären Zuständen 1 und 0 der digitalen Daten korrespondieren.

4. Gerät nach Anspruch 2, wobei die digitalen Daten mit der zweiten Aufzeichnungsdichte durch eine gruppenkodierte Modulation erhalten ist, bei welcher Datenbits in N-Bit-Blöcke segmentiert sind, wobei jeder N-Bit-Block in M-Bit-Daten konvertiert wird und 2^{N} Muster aus dem 2^{M} konvertierten Mustern ausgewählt werden.

5. Gerät nach Anspruch 4, wobei die zweiten digitalen Daten einer Modulation unterworfen sind, bei welcher N = 8 Bits und M = 10 Bits gilt.

6. Gerät nach Anspruch 1, wobei die aufzuzeichnenden digitalen Aufzeichnungsdaten wahlweise auf einem ersten oder zweiten magnetischen Aufzeichnungsmedium (MP, ME) mit verschiedenen Aufzeichnungscharakteristiken aufgezeichnet werden können, wobei die erste Entzerrereinrichtung (42, 43) zwei Entzerrer (42, 43) mit auf Frequenzcharakteristiken der aus zwei durch Wiedergabe der auf dem ersten und zweiten magnetischen Aufzeichnungsmedium (MP, ME) mit der ersten Aufzeichnungsdichte erhaltenen Arten von Wiedergabedaten bestehenden ersten Wiedergabedaten eingestellten Entzerrungscharakteristiken aufweist, und wobei die zweite Entzerrereinrichtung (44, 45) zwei Entzerrer (44, 45) mit auf Frequenzcharakteristiken der aus zwei durch Wiedergabe der auf dem ersten und zweiten Aufzeichnungsmedium (MP, ME) mit der zweiten Aufzeichnungsdichte erhaltenen Arten von Wiedergabedaten bestehenden zweiten Wiedergabedaten eingestellten Entzerrungscharakteristiken aufweist.

7. Gerät nach Anspruch 1, wobei sich das magnetische Aufzeichnungsmedium (1) in einem ersten oder zweiten Wiedergabegeschwindigkeitsmodus, in denen Bewegungsgeschwindigkeiten voneinander verschieden sind, bewegt, wobei
die erste Entzerrereinrichtung (42, 43) zwei Entzerrer (42, 43) mit auf Frequenzcharakteristiken der aus zwei vom ersten und zweiten Aufzeichnungsmedium (1) im ersten und zweiten Wiedergabegeschwindigkeitsmodus wiedergegebenen Arten von Wiedergabedaten bestehenden ersten Wiedergabedaten eingestellten Entzerrungscharakteristiken aufweist, und wobei
die zweite Entzerrereinrichtung (44, 45) zwei Entzerrer (44, 45) mit auf Frequenzcharakteristiken der aus zwei vom Aufzeichnungsmedium (1) im ersten und zweiten Wiedergabegeschwindigkeitsmodus wiedergegebenen Arten von Wiedergabedaten bestehenden zweiten Wiedergabedaten eingestellten Entzerrungscharakteristiken aufweist.

8. Gerät nach Anspruch 1, 6 oder 7, wobei Charakteristiken der Entzerrereinrichtungen (42, 43; 44, 45) in Übereinstimmung mit einer Variation der Charakteristiken der zwei Magnetdrehköpfe (12A, 12B) eingestellt sind.

9. Gerät zur Wiedergabe von Audiodigitaldaten von einem magnetischen Aufzeichnungsmedium (1), auf welchem benachbarte Parallelspuren (TRA, TRB) derart gebildet sind, daß von Audiodigitaldaten mit zwei Aufzeichnungsdichten wahlweise eine Art zusammen mit einem frequenzmodulierten Videoinformationssignal aufgezeichnet ist, wobei die zwei Arten Audiodigitaldaten so ausgewählt sind, daß sie in dem Frequenzspektrum des frequenzmodulierten Videoinformationssignals unterschiedliche Spitzenpegel aufweisen,
**gekennzeichnet durch**
eine Entzerrereinrichtung (42, 43; 44, 45) mit zwei Arten von auf die Wiedergabefrequenzcharakteristiken der Audiodigitaldaten der zwei mit den jeweiligen Spuren (TRA, TRB) assoziierten Aufzeichnungsdichten eingestellten Charakteristiken, und
eine Einrichtung (41) zum Schalten der Charakteristiken der Entzerrereinrichtung (42, 43; 44, 45) in Übereinstimmung mit den zwei auf dem Aufzeichnungsmedium (1) aufgezeichneten Arten von Audiodaten.

## Revendications

1. Appareil de reproduction de données pour collecter des données numériques qui ont été enregistrées à une première ou une seconde densité d'enregistrement par au moins deux têtes magnétiques rotatives (12,12B) de telle sorte que des pistes obliques voisines(TRA,TRB) sont formées sur un support magnétique d'enregistrement (1), par lesdites têtes magnétiques (12A,12B) de manière à obtenir des premières ou secondes données de lecture; caractérisé par:
lesdites têtes magnétiques comportant des premier et second moyens égaliseurs (42,43;44,45) ayant des caractéristiques d'égalisation réglées par rapport aux caractéristiques de fréquence des premières et secondes données de lecture; et
un moyen de commutation (41) pour commuter, dans un mode de lecture des premières ou secondes données de lecture, l'égalisation pour les premières ou les secondes données de lecture par la mise en oeuvre d'un moyen correspondant desdits premier et second moyens égaliseurs (42,43;44,45), dans lequel le taux d'erreurs de bits d'un signal de sortie d'égaliseur provenant dudit premier ou second moyen égaliseur (42,43;44,45) est réduit.

2. Appareil selon la revendication 1, dans lequel les données numériques enregistrées aux première et seconde densités d'enregistrement sont des données ayant des caractéristiques telles que la composante centrale du spectre de fréquences quand les premières données numériques sont enregistrées sur ledit support magnétique d'enregistrement (1) est supérieure à la composante centrale du spectre de fréquences quand les secondes données numériques sont enregistrées.

3. Appareil selon la revendication 2, dans lequel les données numériques ayant la première densité d'enregistrement sont obtenues par modulation dans laquelle les différentes composantes de fréquence correspondent respectivement aux états binaires 1 et 0 des données numériques.

4. Appareil selon la revendication 2, dans lequel les données numériques ayant la seconde densité d'enregistrement sont obtenues par modulation à groupes codés dans laquelle les bits de données sont segmentés en blocs de N bits, chaque bloc de N bits est converti en M bits de données, et 2^{N} combinaisons sont sélectionnées à partir des 2^{M} combinaisons converties.

5. Appareil selon la revendication 4, dans lequel les secondes données numériques sont soumises à une modulation où N= 8 bits et M= 10 bits.

6. Appareil selon la revendication 1, dans lequel les données numériques d'enregistrement à enregistrer peuvent être enregistrées sélectivement sur des premier et second supports magnétiques d'enregistrement (MP,ME) ayant différentes caractéristiques d'enregistrement, ledit premier moyen égaliseur (42,43) comporte deux égaliseurs (42,43) ayant des caractéristiques d'égalisation réglées par rapport aux caractéristiques de fréquence des premières données de lecture constituées de deux types de données de lecture obtenues en lisant les données numériques d'enregistrement enregistrées sur les premier et second supports magnétiques d'enregistrement (MP,ME) à la première densité d'enregistrement, et ledit second moyen égaliseur (44,45) comporte deux égaliseurs (44,45) ayant des caractéristiques d'égalisation réglées par rapport aux caractéristiques de fréquence des secondes données de lecture constituées de deux types de données de lecture obtenues en lisant les données numériques d'enregistrement enregistrées sur lesdites premier et second supports magnétiques d'enregistrement (MP,ME) à la seconde densité d'enregistrement.

7. Appareil selon la revendication 1, dans lequel ledit support magnétique d'enregistrement (1) se déplace dans un de modes à première et seconde vitesses de lecture où les vitesses de déplacement sont différentes entre elles, ledit premier moyen égaliseur (42,43) comporte deux égaliseurs (42,43) ayant des caractéristiques d'égalisation réglées par rapport aux caractéristiques de fréquence des premières données de lecture constituées de deux types de données de lecture lues sur ledit support magnétique d'enregistrement (1) dans les modes à première et seconde vitesses de lecture, et ledit second moyen égaliseur (44,45) comporte deux égaliseurs (44,45) ayant des caractéristiques d'égalisation réglées par rapport aux caractéristiques de fréquence des secondes données de lecture constituées de deux types de données de lecture lues sur ledit support magnétique d'enregistrement (1) dans les modes à première et seconde vitesses de lecture.

8. Appareil selon l'une quelconque des revendications 1, 6 et 7, dans lequel les caractéristiques des moyens égaliseurs (42,43;44,45) sont réglées selon la variation des caractéristiques des deuxdites têtes magnétiques rotatives (12A,12B).

9. Appareil pour lire des données sonores numériques sur un support magnétique d'enregistrement (1) sur lequel sont formées des pistes parallèles voisines (TRA,TRB) de telle sorte que des données sonores numériques de deux densités d'enregistrement sont sélectivement enregistrées avec un signal d'informations vidéo modulé en fréquence, dans lequel les deux groupes de données sonores numériques sont sélectionnés pour qu'ils aient des niveaux de crête différents dans le spectre de fréquences dudit signal d'informations vidéo modulé en fréquence;
caractérisé par:
des moyens égaliseurs (42,43;44,45) ayant deux types de caractéristiques réglées par rapport aux caractéristiques de fréquence de lecture des données sonores numériques des deux densités d'enregistrement associées auxdites pistes respectives (TRA,TRB); et
un moyen (41) pour commuter les caractéristiques desdits moyens égaliseurs (42,43;44,45) selon les deux groupes de données sonores enregistrés sur ledit support d'enregistrement (1).
